# EUROPEAN PATENT SPECIFICATION

(11) **EP 2 210 466 B1**
(45) Date of publication and mention of the grant of the patent: **18.01.2012**
(21) Application number: 09014826.3
(22) Date of filing: 30.11.2009
(51) Int. Cl.: A01D 34/00

(54) **Cutting device for lawn-mowers and lawn-mower comprising said device**
Schneidgerät für Rasenmaher sowie Rasenmäher mit einem solchen Gerät
Appareil pour tondeuse à gazon et tondeuse à gazon avec un tel appareil

(30) Priority: 26.01.2009 IT FI20090014
(43) Date of publication of application: 28.07.2010
(73) Proprietor: Bernini, Fabrizio, 52021 Bucine (AR) (IT)
(72) Inventor: Bernini, Fabrizio, 52021 Bucine (AR) (IT)
(74) Representative: Lanzoni, Luciano

(56) References cited:
- EP-A- 1 645 456
- EP-A- 1 992 211
- EP-A- 1 992 212
- DE-A1- 10 327 223
- DE-A1-102007 023 157
- US-A- 4 887 415

## Description

The object of the present invention is a cutting device for lawn-mowers and a lawn-mower comprising said device.

In particular, the present invention refers to a cutting device for an automatic lawn-mower of domestic use.

The lawn-mowers of known type are generally provided with a box-like body holding a pair of front wheels and a pair of rear wheels allowing the lawn-mower to move onto a grass surface to be trimmed.

Housed inside the box-like body are two electric motors each of which is operatively connected to a respective driving wheel. The motors are in turn powered by respective electric batteries which can be recharged when the lawn-mower is not in use.

The lawn-mowers exhibit also a cutting device consisting of a blade rotating between the front and rear wheels and disposed below the box-like body. The cutting blade is a lamina substantially star-shaped, rotating about a vertical axis by means of a respective electric motor. Moreover, the blade can be adjustably moved close to/away from the grass surface to perform cuts at different height.

The electric motor of the cutting blade is also housed within the box-like body and suitably powered by a respective rechargeable electric battery.

The automatic lawn-mowers are further provided with a programmable processing unit which operates the electric motors connected to the driving wheels and cutting blade. In this way, the lawn-mowers, suitably programmed, can travel along the surface to be cut without the manual intervention of an operator who, in case of the traditional lawn-mowers, provides for leading the box-like body along the surface to be cut. The automatic lawn-mowers are further provided with positioning sensors allowing to avoid possible obstacles located on the surface to be cut and autonomously re-position the lawn-mower at a standby station. The standby station is provided with electric connectors connected to the home power mains and able to be engaged with the batteries disposed inside the box-like body.

In this way, when the batteries must be recharged, the lawn-mower positions itself at the respective standby station by associating electric contacts of the batteries with said electric connectors.

Disadvantageously, the cutting devices of the known lawn-mowers do not ensure a high degree of accuracy in cutting the grass surface.

Actually, such lawn-mowers are unable to distinguish rapidly and efficiently between the presence or not of a grass surface and of any grass to be cut.

As a consequence, such lawn-mowers may leave the grass surface to be mowed and operate in regions where the mowing is not to be made, thereby causing possible damages.

Moreover, such lawn-mowers may linger at regions of the grass surface where there is no grass to be cut, thus leaving other regions non-perfectly mowed.

A known solution is disclosed in document DE10327223, which shows a cutting device for lawn-mower comprising a support body that can be associated at the bottom with a lawn-mower and a cutting blade associated with the support body and able to rotate for cutting a grass surface. Moreover, said device comprise a first sensor (laser sensor) connected to the support body, for detecting the presence of the grass surface in front of the lawn-mower and a second sensor (camera light detector) connected to the support body, located between the blade and the support body, for detecting the presence of grass to be cut

In this context, the technical task on which the present invention is based is to propose a cutting device for lawn-mowers, and a lawn-mower comprising said device, able to overcome the above-cited drawbacks of the prior art.

In particular, the object of the present invention is to provide a cutting device for lawn-mowers, and a lawn-mower comprising said device, able to operate in an extremely accurate manner.

The indicated technical task and the specified purposes are substantially achieved by means of a lawn-mower cutting device exhibiting the technical characteristics set forth in one or more of appended claims 1 to 5, and by means of a lawn-mower exhibiting the technical characteristics set forth in one or more of appended claims 6 to 10.

Further characteristics and advantages of the present invention will appear more clearly by the indicative, and thus non-limitative, description of a preferred, but non-exclusive, embodiment of a lawn-mower, as illustrated in the accompanying drawings, wherein:

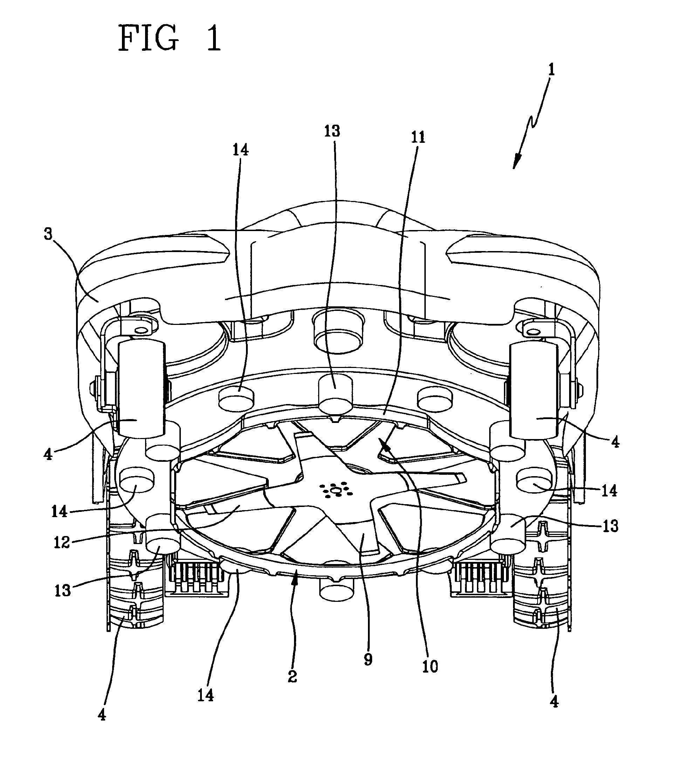

- Fig. 1 is a perspective bottom view of a lawn-mower according to the present invention;
- Fig. 2 is a perspective view of a cutting device according to the present invention; and
- Fig. 3 is a block diagram related to a part of the lawn-mower of Fig. 1

With reference to the figures, numeral 1 indicates as a whole a lawn-mower comprising a cutting device indicated in its entirety by numeral 2.

The lawn-mower 1 comprises a box-like body 3 which, in the illustrated embodiment, is of substantially parallelepiped shape. Connected to the box-like body 3 is a plurality of wheels 4 allowing the support and motion of lawn-mower 1.

In particular, the lawn-mower 1 comprises two coaxial front wheels 4 and two coaxial rear wheels 4.

The wheels 4 are associated at the bottom with the box-like body 3 so as to keep the latter at a predetermined distance from the ground.

In the described embodiment at least two coaxial wheels 4 are motor-driven.

To this end, suitable driving means 16 (not shown in the attached figures) are associated with the box-like body 3 to allow the motion of lawn-mower 1.

In the illustrated embodiment, the driving means 16 comprise an electric motor connected to at least two coaxial wheels 4 and powered by a battery.

The cutting device 2 is associated at the bottom with the box-like body 3 of lawn-mower 1. In particular, the cutting device 2 is associated removably with the box-like body 3 so as to be easily detached and replaced. Alternatively, the cutting device 2 is associated rigidly with the box-like body 3.

As illustrated, the cutting device 2 comprises a support body 5 connected to the box-like body 3 of lawn-mower 1, in particular in correspondence of a lower wall 6 of same box-like body 3.

In greater detail, the support body 5 comprises a disc 7 facing the box-like body 3, and a coupling sleeve 8 connected substantially perpendicularly to the disc 7 and insertable into the box-like body 3 to carry out the coupling of cutting device 2 with the lawn-mower 1. In greater detail, the disc 7 is disposed parallel to lower wall 6.

The cutting device 2 further comprises a cutting blade 9 fitted to the support body 5 and rotating about its axis of rotation "A" to cut the grass surface. The cutting blade 9 lies substantially parallel to the disc 7 of support body 5.

The cutting blade 9 is substantially star-shaped and exhibits a plurality of lobes, preferably angularly equidistant. In the illustrated embodiment, the blade 9 has four lobes angularly spaced through 90°.

A shaft, not shown in the figures, is connected to the blade 9 and goes through the sleeve 8 so as to allow the blade 9 to be connected with suitable means 17 for the motorization of blade 9 disposed inside the box-like body 3 of lawn-mower 1.

The cutting device 2 further comprises a protective crown 10 connected to the support body 5 and located around the blade 9 to limit access to the same blade 9. The protective crown 10 comprises a cylindrical band 11 disposed around the blade 9 and a plurality of spokes 12 for connecting the band 11 to the support body 5. The cutting device 2 further comprises at least a first sensor 13 and a second sensor 14 connected to the support body 5.

In particular, the first sensor 13 is located in correspondence of the cutting blade 9 for detecting the presence of the grass surface. In other words, the first sensor 13 exhibits an active surface 13a lined up with the blade 9. Alternatively, the active surface 13a lies beyond the blade 9 with respect to the support body 5.

The second sensor 14, instead, is located between the support body and the blade 9 for detecting, upon use, the presence of grass to be cut. In other words, the second sensor 14 exhibits an active surface 14a located between the blade 9 and the disc 7 of support body 5. In the described embodiment, the cutting device 2 comprises a plurality of first sensors 13 connected to the support body 5 and located around the cutting blade 9. Moreover, the cutting device 2 preferably comprises a plurality of second sensors 14 located around the cutting blade 9.

In this case, the first 13 and second sensors 14 have a substantially cylindrical shape and develop away from the disc 7 of support body 5.

Again, as illustrated, each first sensor 13 alternates each second sensor 14 around the cutting blade 9. In particular, the first 13 and second sensors 14 are located along a circumference which is preferably coaxial to the axis of rotation "A" around the blade 9. In an alternative embodiment, not shown in the attached figures, the first 13 and second sensors 14 develop starting from the disc 7 according to an arc of circumference coaxial to the axis of rotation "A". In this case, the first 13 and second sensors 14 lie upon separate circumferences having different radius. Alternatively, the first 13 and second sensors 14 may lie on a same circumference.

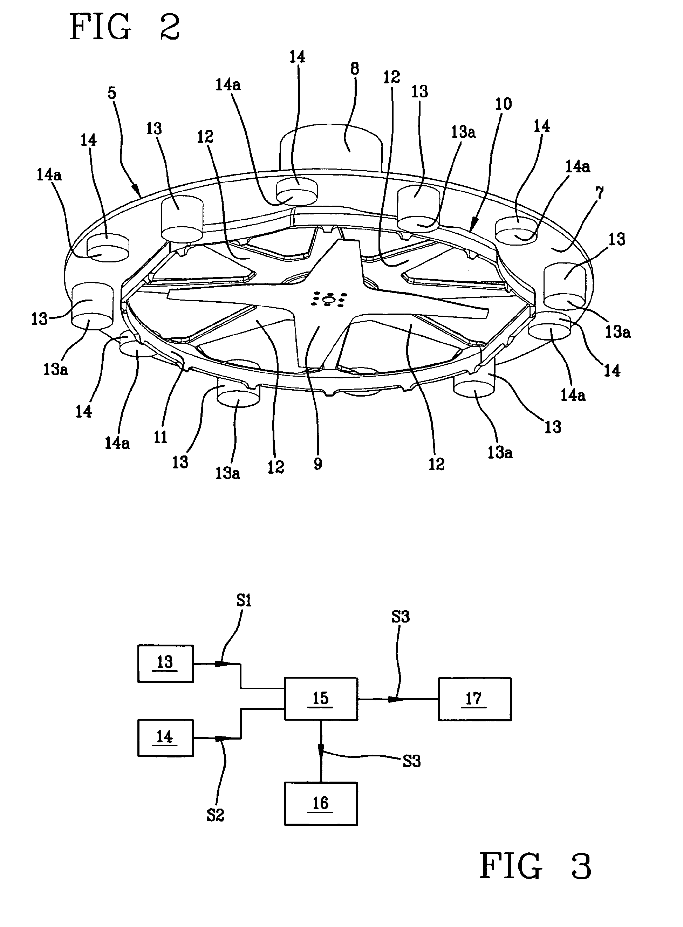

In a further embodiment (not shown), the first 13 and second sensors 14 may exhibit a straight development. The lawn-mower 1 further comprises a processing unit 15 that controls the operation of same lawn-mower 1 (Fig. 3). In detail, the processing unit 15 is connected to the first 13 and second sensors 14 for receiving relevant signals.

In detail, the first sensors 13 generate a first signal S1 upon detecting the presence of the grass surface. The second sensors 14, on the other hand, generate a second signal S2 upon detecting the presence of grass which is high enough to be cut.

In general, the production of first signal S1 is independent of that of second signal S2.

In other words, the two signals are generated one independently of the other, as a consequence of possible different operative conditions.

Upon receiving the first S1 and/or second signal S2, the processing unit 15 processes the received signals and generates a third signal S3 representing a preset operative condition imposed to the lawn-mower 1 as a function of the received signals.

Advantageously, the processing unit 15 is connected to means 16 for driving the box-like body 3 of lawn-mower 1. Advantageously, the processing unit 15 is further connected to motorization means 17 of cutting blade 9. By way of example, when the lawn-mower 1 transits on a region where there is no grass surface (such as a paving), neither the first sensor 13 nor the second sensor 14 will generate respective signals S1, S2. The processing unit 15, therefore, generates the third signal S3 which is fed to driving means 16 for changing the direction of the lawn-mower 1 until the latter starts operating on a grass surface.

In this case, the third signal S3 may also be fed to the motorization means 17 of blade 9 to impose a slowing down or a deactivation of cutting blade 9. Again, if the lawn-mower 1 operates on a region of the grass surface where there is no grass to be cut, the processing unit 15 receives only the first signal S1.

Also in this case, therefore, the processing unit 15 generates the third signal S3 which is fed to driving means 16 for changing the direction of lawn-mower 1 until the latter enters a region having high grass to be cut.

At this point, the second signal S2 is emitted and fed to the processing unit 15.

In the case in which, instead, the lawn-mower 1 results being in operation for a long time on a grass surface having no grass to be cut, the processing unit 15, not receiving the second signal S2, generates and transmits, after a preset period of time, the third signal S3 for a full deactivation of lawn-mower 1.

A further example of application of the cutting device 2 of lawn-mower 1 consists in that the first sensors 13 can operate also independently of each other. In such case, the device is also able to recognize the edge of a grass surface by distinguishing the first sensors, which detect the presence of a grass surface, from those which do not detect it.

Consequently, the lawn-mower 1 is able to track such edge for reaching a recharge station or changing the work region.

The invention achieves the proposed object and major advantages.

In fact, the cutting device according to the invention is able to detect the type of surface on which the lawn-mower operates. In this way, the operation of the lawn-mower can be adapted according to different environment conditions.

As a consequence, the lawn-mower operates more accurately in terms, for example, of grass surface uniformity. It can reduce its operativeness when it is not in a region of grass to be cut and can linger over regions where there is grass to be cut.

## Claims

1. Cutting device for lawn-mower comprising:
- a support body (5) that can be associated at the bottom with a lawn-mower (1);
- a cutting blade (9) associated with said support body (5) and able to rotate for cutting a grass surface; **characterized in that** it comprises
a plurality of first sensors (13) connected to said support body (5), disposed around said cutting blade (9) and exhibiting an active surface (13a) lined up with or below the blade (9) for detecting the presence of said grass surface,
and a plurality of second sensors (14) connected to said support body (5), disposed around said cutting blade (9) and exhibiting an active surface (14a) located between the blade (9) and a disc (7) comprising said support body (5) for detecting the presence of grass to be cut; said first sensors (13) alternating said second sensors (14) around said cutting blade (9).

2. Device according to any of the preceding claims, **characterized in that** said first (13) and/or second sensors (14) have a development shaped as an arc of circumference and are disposed around said cutting blade (9).

3. Device according to any of the preceding claims, **characterized in that** said first (13) and/or second sensors (14) have a straight development.

4. Device according to any of the preceding claims, **characterized in that** said support body (5) comprises a disc (7) substantially parallel to said cutting blade (9) and a sleeve (8) associated with said disc (7) and able to be associated with said law-mower.

5. Device according to any of the preceding claims, **characterized in that** the first (13) and second sensors (14) are located along a circumference which is coaxial to an axis of rotation "A" of the blade (9) around the blade 9.

6. Lawn-mower comprising:
- a box-shaped body (3) having a plurality of wheels (4) associated at the bottom with the same box-shaped body (3) to move it along a grass surface to be cut;
- means (16) for moving said box-shaped body (3) associated with said wheels (4);
**characterized in that** it further comprises a cutting device (2) according to any of claims 1 to 5.

7. Lawn-mower according to claim 6, **characterized in that** it further comprises a processing unit (15) connected to said first (13) and second sensors (14) for receiving respectively a first (S1) and/or second signal (S2) representative respectively of the presence of said grass surface and of grass to be cut.

8. Lawn-mower according to claim 7, **characterized in that** said processing unit (15) processes a third signal (S3) representative of an operating condition in response to the reception of said first (S1) and/or second signal (S2).

9. Lawn-mower according to claim 8, **characterized in that** said processing unit (15) transmits said third signal (S3) to said driving means (16) for changing the direction of said lawn-mower in the absence of said first (S1) and second signal (S2).

10. Lawn-mower according to claim 8, **characterized in that** said processing unit (15) transmits said third signal (S3) to means for the motorization of said cutting blade (9) in order to slow down or deactivate said cutting blade (9) in the absence of said first (S1) and second signal (S2).

## Patentansprüche

1. Schneidvorrichtung für Rasenmäher, Folgendes beinhaltend:
- einen Trägerkörper (5), der an der Unterseite mit einem Rasenmäher (1) verbunden werden kann;
- ein Schneidmesser (9), das mit dem Trägerkörper (5) verbunden ist und rotieren kann, um eine Grasoberfläche zu schneiden;
**dadurch gekennzeichnet, dass** sie mehrere erste Sensoren (13) beinhaltet, die mit dem Trägerkörper (5) verbunden sind, die um das Schneidmesser (9) angeordnet sind und eine aktive Oberfläche (13a) beinhalten, die bündig mit oder unterhalb von dem Messer (9) angeordnet ist, um die Anwesenheit der Grasoberfläche zu erfassen, und mehrere zweite Sensoren (14) aufweist, die mit dem Trägerkörper (5) verbunden sind, die um das Schneidmesser (9) angeordnet sind und eine aktive Oberfläche (14a) beinhalten, die zwischen dem Messer (9) und einer Scheibe (7), die den Trägerkörper (5) beinhaltet, angeordnet sind, um die Anwesenheit des zu schneidenden Grases zu erfassen; wobei die ersten Sensoren (13) abwechselnd mit den zweiten Sensoren (14) rund um das Schneidmesser (9) angeordnet sind.

2. Vorrichtung nach einem der vorgehenden Ansprüche, **dadurch gekennzeichnet, dass** die ersten (13) und/oder zweiten Sensoren (14) eine Entwicklung in Form eines Umfangsbogens aufweisen und rund um das Schneidmesser (9) angeordnet sind.

3. Vorrichtung nach einem der vorgehenden Ansprüche, **dadurch gekennzeichnet, dass** die ersten (13) und/oder zweiten Sensoren (14) eine gerade Entwicklung aufweisen.

4. Vorrichtung nach einem der vorgehenden Ansprüche, **dadurch gekennzeichnet, dass** der Trägerkörper (5) eine Scheibe (7) beinhaltet, die im Wesentlichen parallel zu dem Schneidmesser (9) ist, und eine Hülse (8), die mit der Scheibe (7) verbunden ist und mit dem Rasenmäher verbunden werden kann.

5. Vorrichtung nach einem der vorgehenden Ansprüche, **dadurch gekennzeichnet, dass** die ersten (13) und zweiten Sensoren (14) entlang eines Umfangs um das Messer (9) angeordnet sind, der koaxial zu einer Drehachse "A" des Messers (9) ist.

6. Rasenmäher, Folgendes beinhaltend:
- einen kastenförmigen Körper (3), der mehrere Räder (4) aufweist, die an der Unterseite mit demselben kastenförmigen Körper (3) verbunden sind, um diesen entlang einer zu schneidenden Grasoberfläche zu bewegen;
- Mittel (16) zur Bewegung des kastenförmigen Körpers (3), der mit den Rädern (4) verbunden ist;
**dadurch gekennzeichnet, dass** er ferner eine Schneidvorrichtung (2) nach den Ansprüchen 1 bis 5 beinhaltet.

7. Rasenmäher nach Anspruch 6 , **dadurch gekennzeichnet, dass** er ferner eine Verarbeitungseinheit (15) beinhaltet, die mit den ersten Sensoren (13) und den zweiten Sensoren (14) verbunden ist und die dazu dient, jeweils ein erstes Signal (S1) und/oder zweites Signal (S2) zu empfangen, das jeweils die Anwesenheit der Grasoberfläche und des zu schneidenden Grases darstellt.

8. Rasenmäher nach Anspruch 7, **dadurch gekennzeichnet, dass** die Verarbeitungseinheit (15) ein drittes Signal (S3) verarbeitet, das eine Betriebsbedingung darstellt, als Reaktion auf den Empfang des ersten Signals (S1) und/oder zweiten Signals (S2).

9. Rasenmäher nach Anspruch 8, **dadurch gekennzeichnet, dass** die Verarbeitungseinheit (15) das dritte Signal (S3) an die Antriebsmittel (16) überträgt, um die Richtung des Rasenmähers in Abwesenheit des ersten (S1) und des zweiten Signals (S2) zu ändern.

10. Rasenmäher nach Anspruch 8, **dadurch gekennzeichnet, dass** die Verarbeitungseinheit (15) das dritte Signal (S3) an Mittel für die Motorisierung des Schneidmessers (9) überträgt, um das Schneidmesser (9) bei Abwesenheit des ersten Signals (S1) und zweiten Signals (S2) zu verlangsamen oder zu deaktivieren.

## Revendications

1. Un dispositif de coupe pour tondeuse à gazon comprenant :
- un corps de support (5) qui peut être associé inférieurement à une tondeuse (1) ;
- une lame de coupe (9) associée audit corps de support (5) et pouvant tourner pour couper une surface herbeuse ;
**caractérisé en ce qu'**il comprend une pluralité de premiers capteurs (13) associés audit corps de support (5), disposés autour de ladite lame de coupe (9) et présentant une surface active (13a) alignée avec ou en dessous de la lame (9) pour détecter la présence de ladite surface herbeuse, et une pluralité de deuxièmes capteurs (14) associés audit corps de support (5), disposés autour de ladite lame de coupe (9) et présentant une surface active (14a) située entre la lame (9) et un disque (7) comprenant ledit corps de support (5) pour détecter la présence d'herbe à couper ; lesdits premiers capteurs (13) étant alternés avec lesdits deuxièmes capteurs (14) autour de ladite lame de coupe (9).

2. Le dispositif selon l'une quelconque des revendications précédentes, **caractérisé en ce que** lesdits premiers (13) et/ou deuxièmes (14) capteurs ont un développement en arc de cercle et sont disposés autour de ladite lame de coupe (9).

3. Le dispositif selon l'une quelconque des revendications précédentes, **caractérisé en ce que** lesdits premiers (13) et/ou deuxièmes (14) capteurs ont un développement rectiligne.

4. Le dispositif selon l'une quelconque des revendications précédentes, **caractérisé en ce que** ledit corps de support (5) comprend un disque (7) essentiellement parallèle à ladite lame de coupe (9) et un manchon (8) associé audit disque (7) et pouvant être associé à ladite tondeuse à gazon.

5. Le dispositif selon l'une quelconque des revendications précédentes, **caractérisé en ce que** les premiers (13) et deuxièmes (14) capteurs sont situés le long d'une circonférence qui est coaxiale à un axe de rotation « A » de la lame (9) autour de cette même lame (9).

6. Une tondeuse à gazon comprenant :
- un corps - boîtier (3) ayant une pluralité de roues (4) associées inférieurement à ce même corps
- boîtier (3) pour le déplacer le long d'une surface herbeuse à couper ;
- des moyens (16) pour mouvoir ledit corps - boîtier (3) associé auxdites roues (4) ; **caractérisée en ce qu'**elle comprend en outre un dispositif de coupe (2) selon l'une quelconque des revendications de 1 à 5.

7. La tondeuse à gazon selon la revendication 6, **caractérisée en ce qu'**elle comprend en outre une unité de traitement (15) reliée auxdits premiers (13) et deuxièmes (14) capteurs pour recevoir respectivement un premier (S1) et/ou deuxième (S2) signal représentant respectivement la présence de ladite surface herbeuse et de ladite herbe à couper.

8. La tondeuse à gazon selon la revendication 7, **caractérisée en ce que** ladite unité de traitement (15) traite un troisième signal (S3) représentant une condition opérationnelle en réponse à la réception dudit premier (S1) et/ou deuxième (S2) signal.

9. La tondeuse à gazon selon la revendication 8, **caractérisée en ce que** ladite unité de traitement (15) transmet ledit troisième signal (S3) auxdits moyens d'entraînement (16) pour modifier la direction de ladite tondeuse à gazon en l'absence dudit premier (S1) et deuxième (S2) signal.

10. La tondeuse à gazon selon la revendication 8, **caractérisée en ce que** ladite unité de traitement (15) transmet ledit troisième signal (S3) à des moyens de motorisation de ladite lame de coupe (9) pour ralentir ou désactiver ladite lame de coupe (9) en l'absence dudit premier (S1) et deuxième (S2) signal.
